Europäisches Patentamt

European Patent Office

Office européen des brevets

(19)

(11) Veröffentlichungsnummer: **0 189 169**
**A2**

# (12) EUROPÄISCHE PATENTANMELDUNG

(21) Anmeldenummer: **86100731.8**

(22) Anmeldetag: **21.01.86**

(51) Int. Cl.⁴: **B 60 J 1/20**

---

(30) Priorität: **23.01.85 DE 8501638 U**

(43) Veröffentlichungstag der Anmeldung: **30.07.86**
**Patentblatt 86/31**

(84) Benannte Vertragsstaaten: **AT FR IT NL**

(71) Anmelder: **Boelcke, Achim, Buchenweg 8,
D-3012 Langenhagen 8 (DE)**

(72) Erfinder: **Boelcke, Achim, Buchenweg 8,
D-3012 Langenhagen 8 (DE)**

(74) Vertreter: **Arendt, Helmut, Dipl.-Ing., Hubertusstrasse 2,
D-3000 Hannover 1 (DE)**

---

(54) **Sonnenschutzvorrichtung für Kraftfahrzeugfenster.**

(57) Die Befestigung von Sonnenschutzvorrichtungen mit einer zusammenziehbaren Stoffbahn in Personenkraftfahrzeugen ist durch die Formgebung schwierig. Für eine solche Ausführung wird vorgeschlagen, eine obere Leiste, an welcher die Stoffbahn befestigt ist, mit Haftstreifen zur lösbaren Befestigung an den Fahrzeuginnenflächen zu versehen und die Leiste insbesondere aus einem elastisch biegsamen Material zu fertigen.

DIPL.-ING. HELMUT ARENDT

PATENTANWALT

Hubertusstr. 2 · 3000 Hannover 1

Hannover, 20.01.1986

B 941/A/T Patentanmeldung in Europa
Anmelder: Herr Achim Boelcke
Buchenweg 8

3012 Langenhagen 8

---

## Sonnenschutzvorrichtung für Kraftfahrzeugfenster

Die Erfindung betrifft eine Sonnenschutzvorrichtung für Kraftfahrzeugfenster mit einer zusammenziehbaren Stoffbahn zwischen
zwei am oberen und am unteren Ende des Kraftfahrzeugfensters
befestigbaren Leisten.

Bekannte Vorrichtungen zum Schutz des Fahrzeuginnenraumes vor
Sonneneinstrahlung, beispielsweise Rollos, werden allgemein
in die Wand oder den Fahrzeugrahmen eingebaut. Durch die Integration in den Aufbau des Fahrzeugs ist es nicht möglich,
eine Vorrichtung nachträglich in einem Fahrzeug anzubringen,
wenn nicht der Einbau konstruktiv bereits von Anfang an vorgesehen ist.

Es besteht jedoch ein Bedarf an leicht nachträglich, insbesondere bei Personenkraftfahrzeugen an den Seitenfenstern anbringbaren und wieder abnehmbaren Sonnenschutzvorrichtungen.
Während in der warmen Jahreszeit bei intensiver Sonnenbestrahlung ein Seitenschutz die Fahrzeuginnentemperatur erheblich

- 2 -

senken würde, ist das Vorhandensein einer Schutzvorrichtung
während kühlerer Tage oder insbesondere in der kühleren Jahreszeit entbehrlich. Die ständige Anordnung einer Sonnenschutzvorrichtung, beispielsweise eines Schnapp-Rollos, ist gerade
in kleinräumigen Personenkraftwagen nicht wünschenswert, da
sie einen wenn auch geringen Raum beansprucht und dadurch als
störend empfunden wird.

Aus den vorgenannten Gründen ist es also wünschenswert, eine
Schutzvorrichtung der eingangs genannten Art schnell und ohne
großen Montageaufwand anbringen und wieder abnehmen zu können.
Der Neuerung liegt deshalb die Aufgabe zu Grunde, eine Sonnenschutzvorrichtung so auszubilden, daß das rasche Anbringen und
wieder Abnehmen ohne eine ständig am Fahrzeug verbleibende
Halterung sichergestellt ist. Die neuerungsgemäße Lösung zeichnet sich dadurch aus, daß die obere Leiste der Sonnenschutzvorrichtung mit Haftstreifen zur lösbaren Befestigung an den Fahrzeuginnenflächen versehen ist.
Damit bei gegen die Vertikale geneigten Fensterflächen die
Schutzfläche der Fensterneigung folgen kann, ist es von Vorteil, auch die untere Leiste mit Haftstreifen auszustatten.
In weiterer vorteilhafter Gestaltung der Neuerung wird vorgeschlagen, zumindest die obere Leiste aus einem gummielastischen Material zu Fertigen, so daß sie sich Karosseriekrümmungen
anpassen kann.

Die Haftstreifen ermöglichen das Anbringen der Schutzvorrichtung im Fensterbereich in einfachster Weise dadurch, daß die
obere Leiste lediglich oberhalb des Fensters gegen die Karosseriefläche gepreßt wird. Die Haftkräfte sind ausreichend, um
die gesamte Stoffbahn zu halten. Nach dem Ausziehen der Stoffbahn kann dann auch die untere Leiste unterhalb des Fensters gegen die Karosseriefläche gedrückt werden. Die Stoffbahn wird dadurch gestrafft und unmittelbar an der Fensterfläche gehalten . Umständliche Montagearbeiten, beispielsweise das Verschrauben mit entsprechenden, dauerhaft mit der Karosserie verbundenen Halteelementen entfallen. Die Vorrichtung ist jederzeit einsatzbereit und kann, sobald sie nicht mehr gebraucht wird, durch Abziehen von der Unterlage von ihrem Sitz entfernt werden.

Als besonders günstig haben sich textile Verhakungsverschlüsse (Klettenverschlüsse) als Haftstreifen erwiesen. Sie können an ihren Außenseiten mit Klebefolie oder gummierten Flächen versehen sein. Sie bestehen jeweils aus einem an der Karosseriefläche befestigbaren Basisstreifen und einem an den Leisten der Vorrichtung anklebbaren Haltestreifen. Beide Streifen greifen mit ihren textilen Seiten ineinander, sobald sie aneinandergepreßt werden.

Insbesondere wenn die nach außen weisende Fläche der Stoffbahn verspiegelt ist, werden Temperaturwerte im Innenraum eines Fahrzeugs erreicht, die erheblich unter denen vergleichbarer Fahrzeuge liegen, deren Fenster nicht durch entsprechende Vorrichtungen gegen Sonnenstrahleneinfall geschützt sind. Weitere vorteilhafte Merkmale sind in den Unteransprüchen angegeben. In der Zeichnung ist ein Ausführungsbeispiel der Neuerung schematisch dargestellt und nachstehend erläutert.

Es zeigen:

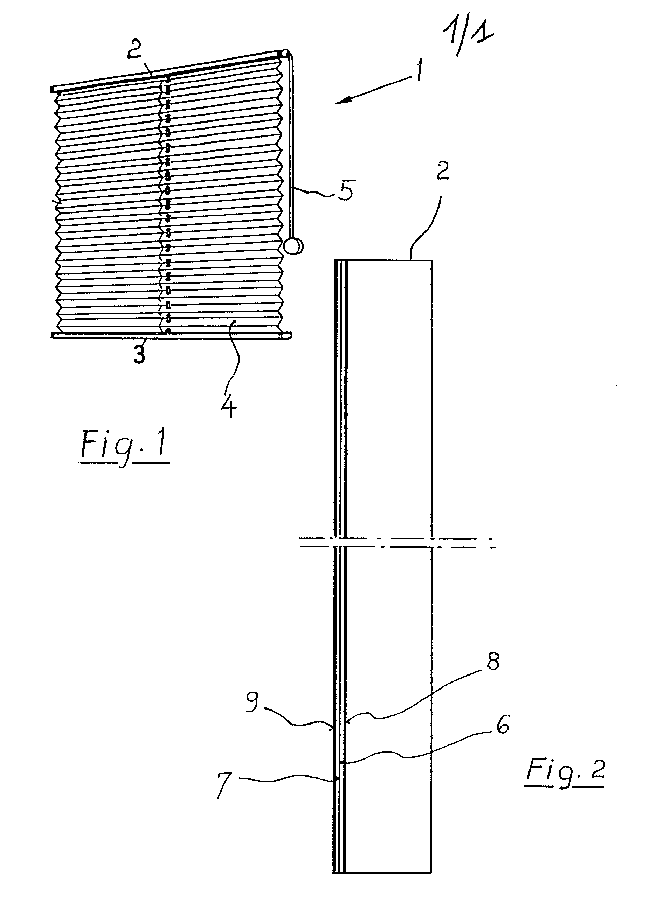

Fig. 1  die Gesamtansicht einer Sonnenschutzvorrichtung und

Fig. 2  in größerem Maßstab die Draufsicht auf die obere der beiden Leisten.

- 4 -

Die Sonnenschutzvorrichtung besteht aus einer zwischen
einer oberen 2 und einer unteren 3 Leiste eingespannten Stoffbahn 4. Besonders gut eignet sich ein plissierter
Textilbehang, wie in dem dargestellten Beispiel skizziert
ist.

Die obere Leiste oder Kopfleiste 2 ist ein Hohlprofil, das
teilweise von einer Zugschnur 5 durchsetzt ist. An der der
Karosseriefläche zugewandten Seite ist die Kopfleiste 2 mit
einem Haftstreifen bestückt. Dieser besteht aus einem an
der Kopfleiste unmittelbar angeklebten Haltestreifen 6 und
einem Basisstreifen 7, der nach der Montage an der Fahrzeugkarosserie, d. h. an der Innenfläche des Fahrzeugraumes im
Fensterbereich haftet. Zu diesem Zweck sind die Streifen mit
Klebefolien 8 und 9 versehen, die gegebenenfalls auch durch
eine Gummierung ersetzt sein können.

Zur Montage wird die Sonnenschutzvorrichtung mit der Kopfleiste 2 einfach gegen ihre Unterlage gepreßt, wodurch sie
sich infolge ihrer gummielastischen Eigenschaft einer eventuellen Krümmung der Haltefläche anpassen kann. Durch das
Anpressen der Kopfleiste an ihre Unterlage haftet der Basisstreifen 7 mit seiner Klebefläche 9 im Fensterbereich an der
Karosserieinnenseite und sorgt für einen genügenden Halt der
gesamten Vorrichtung. Die Stoffbahn kann nunmehr einfach durch
Lösen der üblichen, nicht dargestellten Klemmvorrichtung für
die Zugschnur 5 heruntergelassen werden. Die untere Leiste
kann dann ebenso wie die Kopfleiste gegen ihre Unterlage gepreßt werden. Durch Abziehen der Leisten von ihren Unterlagen
bleiben die Basisstreifen 7 an der Fahrzeugkarosserie haften
und sind damit erneut zur Herstellung einer Klettenschlußverbindung mit den an den Leisten haftenden Haltestreifen 7 bereit.

DIPL.-ING. HELMUT ARENDT

PATENTANWALT

Hubertusstr. 2 · 3000 Hannover 1

Hannover, 20.01.1986

B 941/A/T Patentanmeldung in Europa
Anmelder: Herr Achim Boelcke
Buchenweg 8

3012 Langenhagen 8

PATENTANSPRÜCHE

1. Sonnenschutzvorrichtung für Kraftfahrzeugfenster mit einer zusammenziehbaren Stoffbahn zwischen zwei am oberen und unteren Ende des Kraftfahrzeugfensters befestigbaren Leisten, dadurch gekennzeichnet, daß die obere Leiste (2) mit Haftstreifen (6, 7) zur lösbaren Befestigung an den Fahrzeuginnenflächen versehen ist.

2. Vorrichtung nach Anspruch 1, dadurch gekennzeichnet, daß beide Leisten mit den Haftstreifen versehen sind.

3. Vorrichtung nach den Ansprüchen 1 und/oder 2, dadurch gekennzeichnet, daß die Kopfleiste (2) aus einem elastisch biegsamen Material besteht.

4. Vorrichtung nach einem oder mehreren der Ansprüche 1 bis 3, dadurch gekennzeichnet, daß beide Leisten aus einem elastisch biegsamen Material bestehen.

- 2 -

5. Vorrichtung nach einem oder mehreren der Ansprüche 1 bis 4, dadurch gekennzeichnet, daß die Leisten aus einem gummiartigen Material bestehen.

6. Vorrichtung nach einem oder mehreren der Ansprüche 1 und/oder 2, dadurch gekennzeichnet, daß die Kopfleiste (2) aus einem plastisch biegsamen Material besteht.

7. Vorrichtung nach einem oder mehreren der Ansprüche 1, 2 und 6, dadurch gekennzeichnet, daß beide Leisten aus einem plastisch biegsamen Material bestehen.

8. Vorrichtung nach einem oder mehreren der Ansprüche 1 bis 7, dadurch gekennzeichnet, daß die Kopfleiste aus einem Hohlprofil besteht.

9. Vorrichtung nach einem oder mehreren der Ansprüche 1 bis 8, dadurch gekennzeichnet, daß als Haftstreifen textile Verhakungsverschlüsse (Klettenverschlüsse) eingesetzt sind.

10. Vorrichtung nach einem oder mehreren der Ansprüche 1 bis 9, dadurch gekennzeichnet, daß die Verhakungsverschlüsse aus zwei aneinanderdrückbaren und durch Verhakung aneinanderhaftenden Textilstreifen (6, 7) bestehen, deren voneinander abgekehrte Flächen mit Klebefolien bzw. einer Klebegummierung versehen sind.

11. Vorrichtung nach einem oder mehreren der Ansprüche 1 bis 10, dadurch gekennzeichnet, daß die Stoffbahn (4) aus einem plissierten Textilgewebe besteht.

12. Vorrichtung nach einem oder mehreren der Ansprüche 1 bis 11, dadurch gekennzeichnet, daß die Stoffbahn an ihrer dem Fenster zugekehrten Seite verspiegelt ist.

0189169

1/1

*Fig. 1*

*Fig. 2*